# EUROPÄISCHE PATENTANMELDUNG

(11) **EP 0 530 624 A1**
(43) Veröffentlichungstag der Anmeldung: **10.03.1993**
(21) Anmeldenummer: 92114358.2
(22) Anmeldetag: 22.08.1992
(51) Int. Cl.: C01G 19/02, H01B 1/08, G03G 9/097

(54) **Verfahren zur Herstellung von feinteiligem, elektrisch leitfähigem Zinn-IV-Oxid**

(30) Priorität: 06.09.1991 DE 4129611
(71) Anmelder: Th. Goldschmidt AG, D-45127 Essen (DE)
(72) Erfinder: Giersberg, Joachim, W-5370 Marl-Sinsen (DE); Klapdor, Astrid, W-4300 Essen 1 (DE)

(57) **Zusammenfassung**

Verfahren zur Herstellung von feinteiligem, elektrisch leitfähigem Zinn-IV-Oxid durch Ausfällen von Zinnoxid und/oder Zinnoxidhydrat aus einer Fluorid-Ionen als Dotierungsmittel enthaltenden Dihydroxyzinndichlorid-Lösung durch Zugabe von Alkali- bzw. Ammoniumhydroxid oder Alkali- bzw. Ammoniumcarbonat, Abtrennen des Zinnoxids und/oder Zinnoxidhydrates von dem wäßrigen Medium und Calcinieren des abgetrennten Produktes in an sich bekannter Weise.

## Beschreibung

Die Erfindung betrifft ein Verfahren zur Herstellung von feinteiligem, elektrisch leitfähigem Zinn-IV-Oxid durch Ausfällen von Zinnoxid und/oder Zinnoxidhydrat aus der Lösung eines Salzes des vierwertigen Zinns in einem polaren organischen Lösungsmittel oder Wasser oder einem Gemisch eines polaren organischen Lösungsmittels mit Wasser in Gegenwart wirksamer Mengen eines fluorhaltigen Dotierungsmittels.

Die Erfindung betrifft ferner die Verwendung des nach dem erfindungsgemäßen Verfahren erhaltenen Zinn-IV-Oxids als Füllstoff oder Pigment in Kunststoffen, Lacken, Farben, Papier, Textilien und Tonern.

Es ist seit langem bekannt, elektrisch leitfähige und infrarotreflektierende Zinnoxidschichten auf Substrate, insbesondere auf Glas, aufzubringen. Vielfach erfolgt die Herstellung solcher auf Glas aufgebrachten elektrisch leitfähigen und infrarotreflektierenden Zinnoxidschichten durch pyrolytische Zersetzung von flüssigen Zubereitungen, die im wesentlichen eine oder mehrere Basis-Zinnverbindungen und eine oder mehrere geeignete fluoridhaltige Dotierungsverbindungen enthalten.

Die elektrische Leitfähigkeit wird durch Fehlstellen in den jeweiligen Zinnoxidschichten erzeugt, wobei solche Fehlstellen zum größten Teil durch die zugesetzten Dotierungsmittel gebildet werden. Hierbei werden nur wenig unterhalb des Leitungsbandes Störstellenterme resp. Donatorterme erzeugt, aus denen gegebenenfalls unter geringem Energieaufwand Elektronen in das Leitungsband gebracht werden können. Dies ist bei reinem, undotiertem Zinnoxid aufgrund der zwischen Valenzband und Leitungsband vorhandenen verbotenen Zone nicht der Fall.

Im Hinblick auf die elektrische Leitfähigkeit bzw. einer antistatischen Einstellung von verschiedenen festen und flüssigen technischen Produkten, wie z.B. von Kunststoffen, Lacken und Farben, Papieren, Tonern und Textilien, werden elektrisch leitfähige Pigmente benötigt. Neben Metallpulvern und Graphit, die zwangsläufig eine dunkle Einfärbung solcher technischen Produkte nach sich ziehen, werden vielfach pulverförmige Halbleiter eingesetzt. Hierbei ist es wünschenswert, möglichst weiße bis hellfarbene, feinkörnige Halbleiterpigmente mit hoher elektrischer Leitfähigkeit bzw. geringem spezifischen Widerstand einsetzen zu können.

In der EP-A-0 235 968 ist eine transparente, wäßrige, eine Zinnverbindung enthaltende Lösung beschrieben, die durch Umsetzung von Zinncarboxylat, insbesondere Zinnoxalat, mit Wasserstoffperoxid im Verhältnis 1 : 1,5 oder darüber in wäßrigem Medium erhalten wird. Dabei kann in dem Reaktionssystem ein Dotierungsmittel in einer Menge von 0,01 bis 0,35 Mol je Mol Zinncarboxylat enthalten sein. Diese transparente wäßrige Lösung wird oberhalb 400°C calciniert.

Dieses Verfahren kann aber noch nicht in jeder Hinsicht befriedigen. Das als Ausgangsprodukt vorzugsweise dienende Zinn-II-Oxalat muß zunächst aus metallischem Zinn oder einer Zinn-II-Verbindung hergestellt werden. Zinn-II-Oxalat ist in Wasser schwer löslich, so daß die Oxidation mit H₂O₂ in wäßrigem Medium in heterogener Phase abläuft.

Es ist zur Beseitigung dieser Nachteile im deutschen Patent 40 34 353 auch schon vorgeschlagen worden, die benötigte Zinn-IV-Oxalat-Lösung in der ersten Stufe durch Elektrolyse einer wäßrigen Oxalsäure-Lösung unter Verwendung von Anoden aus Zinn oder zinnhaltigen Legierungen herzustellen.

Fällt man aus diesen Lösungen Zinn-IV-Oxid oder das entsprechende Zinn-IV-Oxidhydrat z.B. mit Alkalilauge oder Ammoniumhydroxid aus, entstehen oxalathaltige Abwässer, die entsorgt werden müssen. Entwässert man die vorgenannten Suspensionen durch Sprühtrocknung, erhält man Zinn-IV-Oxid in vorwiegend kugeliger Form. Anwendungstechnisch erwünscht ist jedoch amorphes Zinn-IV-Oxid, dessen Teilchenform je nach Verwendungszweck variiert werden kann.

Der vorliegenden Erfindung liegt das technische Problem zugrunde, ein Verfahren zu finden, welches es gestattet, ein fluordotiertes, hellfarbiges Zinn-IV-Oxid optimaler Leitfähigkeit mit gewünschter Teilchengröße und Teilchenform bei möglichst homogener Kornverteilung herzustellen.

Erfindungsgemäß gelingt dies durch ein Verfahren mit dem Kennzeichen, daß man das Zinnoxid und/oder Zinnoxidhydrat aus einer wäßrigen, das Dotierungsmittel enthaltenden Dihydroxyzinndichlorid-Lösung durch Zugabe von Alkali- bzw. Ammoniumhydroxid oder Alkali- bzw. Ammoniumcarbonat ausfällt, aus dem wäßrigen Medium abtrennt und das abgetrennte Produkt in an sich bekannter Weise calciniert.

Die Lösungen von (OH)₂SnCl₂ in einem polaren Lösungsmittel, wie Alkoholen, Aldehyden, Ketonen, Estern oder Ethern, lassen sich leicht durch Oxidation von gelöstem Zinn-II-chlorid (wasserfrei) mit Wasserstoffperoxid herstellen. Dabei werden die organischen Lösungsmittel, insbesondere Alkohol, eingesetzt, um kolloidale Präzipitate zu erhalten sowie um ein Kristallwachstum zu verhindern.

Wäßrige Lösungen von (OH)₂SnCl₂ können in hohen Konzentrationen durch vorzugsweise elektrolytische Oxidation wäßriger Lösungen von Zinn-II-chlorid hergestellt werden. Die Lösungen sind hydrolysestabil. Sie bedürfen keiner Stabilisierung durch Zusatz von HCl. Es bilden sich auch bei längerem Stehen keine Niederschläge. Eingedickte, hochkonzentrierte Lösungen lassen sich ohne weiteres wieder auf Gebrauchskonzentration verdünnen. Das Verhältnis Sn : Cl beträgt 1 : 2, so daß die Abwasser- bzw. Emissionsprobleme relativ niedrig gehalten werden können.

Fällt man aus diesen Lösungen das Zinn-IV-Oxid und/oder Zinn-IV-Oxidhydrat durch Umsetzung mit Alkali- oder Ammoniumhydroxid oder -carbonat aus, enthalten die zu entsorgenden Abwässer nur Alkali- oder Ammoniumchloride, wobei die günstige Relation von 1 Atom Zinn : 2 Atomen Chlor zusätzlichen Vorteil bietet.

Als Dotierungsmittel sind HF, SnF₂, (HO)₂SnF₂, Ammoniumfluoride und Alkalifluoride in aus dem Stand der Technik bekannter Weise brauchbar. Die Menge an Dotierungsmittel wird dabei zweckmäßig so gewählt, daß bei der Dotierung ein Verhältnis von Zinn : Fluor von 1 : 0,2 bis 0,6, insbesondere von 1 : 0,3 bis 0,4, vorliegt.

Das Verfahren kann in der Weise durchgeführt werden, daß man die (HO)₂SnCl₂-Lösung oder das Fällungsmittel vorlegt. Vorzugsweise wird jedoch die Lösung des Zinnsalzes in die Lösung des Fällungsmittels zugetropft. Dabei wird zweckmäßig intensiv gerührt. Je nach Geschwindigkeit der Zugabe, der Temperatur der wäßrigen Lösungen und der Intensität des Rührens kann Einfluß auf die Form und Teilchengröße des ausgefällten Zinn-IV-Oxids genommen werden. Die Beeinflussung dieser Parameter durch die Art und Weise der Fällung sind dem Fachmann aus der allgemeinen chemischen Verfahrenstechnik bekannt.

Das Dotierungsmittel kann bereits bei der Herstellung des Dihydroxyzinndichlorides zugegeben werden. Es sollte jedoch in der Lösung des Zinnsalzes vor der eigentlichen Fällungsreaktion enthalten sein.

Die Filtration des ausgefallenen Zinn-IV-Oxids und/oder Oxidhydrates bereitet in der Regel keine Schwierigkeiten. Die Zugabe von aus Cellulosefasern bestehenden Filterhilfsmitteln, wie Filterwatte, kann die Geschwindigkeit der Filtration erhöhen. Dabei hat sich überraschenderweise gezeigt, daß die Leitfähigkeit des Endproduktes erhöht wird, wenn man das Filterhilfsmittel im Produkt beläßt und die Calcination durchführt, ohne vorher das Filterhilfsmittel abzutrennen. Hierdurch wird die Leitfähigkeit des Zinn-IV-Oxids weiter erhöht. Der Effekt der Filterwatte ergibt sich aus folgender Darstellung der typischen Werte eines Vergleichsversuches:

| Filterwatte Zusatz in Gew.-% | spez. Widerstand [Ω . m] |
|---|---|
| 0 | 270 . 10³ |
| 1,2 | 150 |
| 2,0 | 24 |
| 2,1 | 16 |

Es kann deshalb durchaus von Vorteil sein, größere Mengen an Filterhilfsmitteln zuzusetzen, als zur Erhöhung der Filtrationsgeschwindigkeit an sich notwendig sind. Ist das Produkt auch ohne Filterhilfsmittel gut filtrierbar, kann man das Filterhilfsmittel dem Produkt unmittelbar vor der Calcination zusetzen.

Der Filterrückstand wird weitgehend chlorfrei gewaschen (Restchlorgehalt < 1 Gew.-%) und danach schonend getrocknet. Es empfiehlt sich, eine Vakuumtrocknung bei 25 bis 40°C und einem Druck von < 0,5 mbar durchzuführen.

Die Calcination erfolgt innerhalb eines Temperaturbereiches von 300 bis 600°C, vorzugsweise 400 bis 550°C, und wird nach Erreichen der optimalen Leitfähigkeit beendet. In der Regel beträgt die Calcinierungszeit 30 bis 90 Minuten.

Das erfindungsgemäß erhaltene feinteilige dotierte Zinn-IV-Oxid eignet sich in hervorragender Weise als Füllstoff oder Pigment in Kunststoffen, Lacken, Farben, Papier, Textilien und Tonern.

Das erfindungsgemäße Verfahren soll anhand der folgenden Beispiele noch näher erläutert werden.

### Beispiel 1

Zu einer Lösung von 1 Mol (HO)₂SnCl₂ und 0,15 Mol (HO)₂SnF₂ (Feststoffgehalt = 10 %) wird eine 10 %ige NaOH-Lösung unter intensivem Rühren zugegeben, bis ein pH-Wert von 7 gemessen wird. Die Zugabezeit beträgt etwa 2 Stunden, die Temperatur wird während der gesamten Zugabezeit konstant bei 20°C gehalten. Der erhaltenen Suspension werden 1,2 Gew.-% (bezogen auf kalkulatorischen Filtrationsrückstand, wasserfrei) Filterwatte, die im Handel unter der Bezeichnung Schleicher & Schüll, No 122, erhältlich ist, zugesetzt und unter gutem Rühren verteilt. Die Suspension wird filtriert und der Filterkuchen mit einer HF-enthaltenden wäßrigen Lösung (F-Gehalt 200 ppm) weitgehend chloridfrei gewaschen (Restchlorgehalt < 1,0 Gew.-%). Der Filterkuchen wird im Vakuum bei 40°C und 0,3 mbar getrocknet und anschließend bei 500°C 25 Minuten calciniert.

Das resultierende Pulver weist folgende Kenndaten auf:
- L-Wert: = 78
- spez. Oberfläche: = 55 m²/g (BET)
- spez. Widerstand: = 150 Ω . m

### Beispiel 2

Das Verfahren des Beispiels 1 wird wiederholt, jedoch wird die NaOH-Lösung vorgelegt und die Fällung bei Erreichen eines pH-Wertes 1 beendet.

Das resultierende Pulver weist folgende Kenndaten auf:
- L-Wert: = 72
- spez. Oberfläche: = 59 m²/g (BET)
- spez. Widerstand: = 21 Ω . m

### Beispiel 3

Das Verfahren des Beispiels 1 wird wiederholt, jedoch wird eine Fällungstemperatur von 80°C eingehalten.

Das resultierende Pulver weist folgende Kenndaten auf:
- L-Wert: = 70
- spez. Oberfläche: = 77 m²/g (BET)
- spez. Widerstand: = 92 Ω . m

### Beispiel 4

Das Verfahren des Beispiels 3 wird wiederholt, jedoch wird das getrocknete, aber noch nicht calcinierte Rohprodukt mit wechselnden Mengen Filterwatte der vorgenannten Type vermischt und dann entsprechend Beispiel 3 calciniert.

Die resultierenden Pulver weisen folgende Kenndaten auf:

| Kenndaten | Filterwattezusatz (Gew.-%) | | | |
|---|---|---|---|---|
| | 0,5 | 1,0 | 2,0 | 5,0 |
| L-Wert | 77 | 77 | 77 | 69 |
| spez. Oberfläche m²/g (BET) | 47 | 49 | 49 | 37 |
| spez. Widerstand Ω . m | 24 | 16 | 16 | 27 |

### Beispiel 5

Es wird eine 10 gew.-%ige wäßrige NH₃-Lösung mit einer Temperatur von 50°C vorgelegt, der eine 10 gew.-%ige Lösung von (HO)₂SnCl₂, welche als Dotierungsmittel HF enthält (Molverhältnis Sn : F = 1 : 0,36), zugetropft wird, bis ein pH-Wert von 2,0 erreicht ist. Dabei wird intensiv gerührt.

Die Aufarbeitung erfolgt gemäß Beispiel 1, die Zugabe von Filterwatte gemäß Beispiel 4.

Die resultierenden Pulver weisen folgende Kenndaten auf:

| Kenndaten | Filterwattezusatz (Gew.-%) | |
|---|---|---|
| | 2,0 | 3,0 |
| L-Wert | 68 | 66 |
| spez. Oberfläche m²/g (BET) | 68 | 54 |
| spez. Widerstand Ω . m | 14 | 11 |

## Patentansprüche

1. Verfahren zur Herstellung von feinteiligem, elektrisch leitfähigem Zinn-IV-Oxid durch Ausfällen von Zinnoxid und/oder Zinnoxidhydrat aus der Lösung eines Salzes des vierwertigen Zinns in einem polaren organischen Lösungsmittel oder Wasser oder einem Gemisch eines polaren organischen Lösungsmittels mit Wasser in Gegenwart wirksamer Mengen eines fluorhaltigen Dotierungsmittels, dadurch gekennzeichnet, daß man das Zinnoxid und/oder Zinnoxidhydrat aus einer, das Dotierungsmittel enthaltenden Dihydroxyzinndichlorid-Lösung durch Zugabe von Alkali- bzw. Ammoniumhydroxid oder Alkali- bzw. Ammoniumcarbonat ausfällt, aus dem wäßrigen Medium abtrennt und das abgetrennte Produkt in an sich bekannter Weise calciniert.

2. Verfahren nach Anspruch 1, dadurch gekennzeichnet, daß man das ausgefallene Zinnoxid und/oder Zinnoxidhydrat von dem Lösungsmittel unter Verwendung von aus Cellulose-Fasern bestehenden Filterhilfsmitteln abtrennt und das Produkt zusammen mit dem Filterhilfsmittel calciniert.

3. Verfahren nach Anspruch 2, dadurch gekennzeichnet, daß man das Filterhilfsmittel in einer größeren Menge, als zur Erhöhung der Filtrationsgeschwindigkeit erforderlich, zusetzt.

4. Verwendung des nach einem oder mehreren der vorhergehenden Ansprüche hergestellten Zinn-IV-Oxids als Füllstoff oder Pigment in Kunststoffen, Lacken, Farben, Papier, Textilien und Tonern.
